# EUROPÄISCHE PATENTSCHRIFT

(11) **EP 3 173 319 B1**
(45) Veröffentlichungstag und Bekanntmachung des Hinweises auf die Patenterteilung: **05.10.2022**
(21) Anmeldenummer: 16198002.4
(22) Anmeldetag: 09.11.2016
(51) Int. Cl.: B62D 55/125, B62D 55/135

(54) **ANTRIEBSTROMMEL FÜR KETTENGETRIEBENE FAHRZEUGE**
DRIVING DRUM FOR TRACKED VEHICLES
TAMBOUR D'ENTRAÎNEMENT POUR VÉHICULES ENTRAÎNÉS PAR CHAINES

(30) Priorität: 27.11.2015 DE 102015120608
(43) Veröffentlichungstag der Anmeldung: 31.05.2017
(73) Patentinhaber: Krauss-Maffei Wegmann GmbH & Co. KG, 80997 München (DE)
(72) Erfinder: Wittmann, Christoph, 80997 München (DE); Schiller, Silvio, 80997 München (DE)
(74) Vertreter: Feder Walter Ebert

(56) Entgegenhaltungen:
- DE-A1- 2 629 362
- DE-B1- 2 640 596
- DE-U- 7 039 635
- GB-A- 952 730
- US-A- 2 389 624

## Beschreibung

Die Erfindung betrifft eine Antriebstrommel für kettengetriebene Fahrzeuge, insbesondere militärische Fahrzeuge.

Bei Kettenfahrzeugen werden die Ketten über außen am Fahrzeug drehbar angeordnete Antriebstrommeln angetrieben, welche mit dem Antrieb des Fahrzeugs verbunden sind. Die Antriebstrommeln sind umfangsseitig in der Regel mit sogenannten Triebkränzen versehen, die nach Art von Ritzeln in entsprechende Ausnehmungen der Kette eingreifen und diese antreiben.

Vor allem im Bereich kettengetriebener militärischer Fahrzeuge kann es von Zeit zu Zeit je nach Art und Einsatzzweck des Kettenfahrzeugs vorkommen, dass die an dem Kettenfahrzeug vorgesehenen Ketten gegen Ketten eines völlig anderen Typs bzw. anderer Bauformen oder Abmessungen getauscht werden müssen. Beispielsweise ist es so, dass in Krisen- und Kampfgebieten häufig Stahlketten verwendet werden, die gegenüber äußeren Einflüssen robust und auf unterschiedlichstem Terrain einsetzbar sind. Zusätzlich werden auch aus Gewichtsgründen häufig leichtgewichtigere beispielsweise aus einem Gummimaterial bestehende Bandketten verwendet. Außerdem können zur Reduktion des Bodendrucks breitere Ketten zum Einsatz kommen.

Beim Wechsel beispielsweise von einer Stahlkette hin zu einer Gummibandkette hat es sich als nachteilig erwiesen, dass diese unterschiedlichen Kettentypen von deren Konstruktion her betrachtet zumeist erhebliche Unterschiede aufweisen.

Es ist daher nicht ohne weiteres möglich, auf einer speziell für einen bestimmten Kettentyp gestalteten Antriebstrommel auch eine Kette eines anderen Typs zu betreiben. Beim Kettenwechsel kann es daher erforderlich sein, entweder die Antriebstrommel komplett zu demontieren und gegen eine für den anderen Kettentyp ausgelegte Antriebstrommel zu ersetzen oder die vorhandene Antriebstrommel über Adapter oder ähnliche Anpassungen, welche zu Festigkeitseinbußen führen können, an den anderen Kettentyp anzupassen. Dies ist jedoch mit einem vergleichsweise hohen Montageaufwand und damit vor allem im Bereich von Krisen- und Kampfeinsätzen unerwünscht langen Umrüstzeiten verbunden. Einen Antriebstrommel mit den Merkmalen des Oberbegriffs von Anspruch 1 wird gezeigt durch die US 2 389 624 A.

**Aufgabe** der vorliegenden Erfindung ist es daher, eine Antriebstrommel für kettengetriebene Fahrzeuge anzugeben, bei welcher der Montageaufwand beim Wechseln des Kettentyps reduziert ist.

Diese Aufgabe wird bei einer Antriebstrommel der eingangs genannten Art mit mindestens drei umfangsseitig angeordnete Triebkranzaufnahmen zur Montage von in die Fahrzeugkette eingreifenden Triebkränzen dadurch gelöst, dass der Trommeldurchmesser im Bereich der axial außen liegenden Triebkranzaufnahme geringer ist als der Trommeldurchmesser im Bereich der mittleren Triebkranzaufnahme und/oder der axial innen liegenden Triebkranzaufnahme, wobei zwischen der axial äußeren Triebkranzaufnahme und der mittleren Triebkranzaufnahme ein Durchmessersprung nach Art einer konischen Schräge angeordnet ist.

An den Triebkranzaufnahmen können wahlweise verschiedene Triebkränze montiert werden, je nachdem mit welcher Art von Kette das Kettenfahrzeug betrieben werden soll. Zumeist ist es so, dass bei herkömmlichen Ketten jeweils ein innerer und ein äußerer Triebkranz pro Kette vorgesehen sind. Durch Anordnung mindestens eines Triebkranzes an einer weiteren Stelle wird eine Möglichkeit geschaffen, unter Anpassung an die konstruktiven Gegebenheiten unterschiedlicher Kettentypen entsprechende Triebkränze zu montieren. Es ist daher beim Kettenwechsel nicht erforderlich, die gesamte Antriebstrommel zu demontieren. Vielmehr können entsprechend der Anforderungen des jeweiligen Kettentyps gezielt nur die Triebkränze getauscht und wahlweise an den verschiedenen Triebkranzaufnahmen montiert werden. Hierdurch wird eine Vielzahl an Möglichkeiten unterschiedlicher Triebkranzkonfigurationen geschaffen, so dass mit nur einer Trommel zuverlässig unterschiedlichste Typen von Ketten betrieben werden können.

An der freien Triebkranzaufnahme, bei der es sich beispielsweise um die mittlere Triebkranzaufnahme handeln kann, können vorteilhafterweise weitere Kettenführungselemente befestigt werden. Diese können insbesondere derart ausgebildet sein, dass sie mit einem Mittenführungszahn der Kette zusammenwirken.

Eine vorteilhafte Ausgestaltung sieht vor, dass die Triebkranzaufnahmen nach Art von Befestigungsflanschen ausgebildet sind. Durch die Ausbildung der Triebkranzaufnahmen als Befestigungsflansche ergibt sich eine gleichsam einfache wie zuverlässige Befestigungsmöglichkeit der Triebkränze. Weiterhin wird vorgeschlagen, dass die Triebkranzaufnahmen jeweils mehrere Aufnahmeelemente aufweisen. Die Aufnahmeelemente der Triebkranzaufnahmen können korrespondierend zu den Triebkränzen ausgestaltet und derart angeordnet sein, dass verschiedene Arten von Triebkränzen aufgenommen werden können.

Vorteilhafterweise sind die Aufnahmeelemente der einzelnen Triebkranzaufnahmen gegeneinander winkelversetzt angeordnet. Durch die über den Umfang der Antriebstrommel betrachtet gegeneinander winkelversetzte Anordnung der Triebkranzaufnahmen, ergibt sich durch die zwischen den einzelnen Aufnahmeelementen bestehenden Öffnungen eine weitere Montagevereinfachung. Beispielsweise können die Triebkränze derart gegenüber der axial außen liegenden Triebkranzaufnahme verdreht werden, dass diese durch die zwischen den Aufnahmeelementen der äußeren Triebkranzaufnahme bestehenden Öffnungen hindurch auf direktem Weg an eine dahinterliegende Triebkranzaufnahme herangeführt werden.

Eine weitere Ausgestaltung sieht vor, dass die Aufnahmeelemente jeweils eine Montagestelle aufweisen. Die Montagestellen können beispielsweise nach Art von Öffnungen zur Bildung einer gemeinsamen Flanschverbindung mit einer korrespondierend ausgestalteten und angeordneten Öffnung des zugehörigen Zahnkranzes ausgestaltet sein.

Um zwei identisch ausgebildete Triebkränze wahlweise an verschiedenen Triebkranzaufnahmen montieren zu können, wird ferner vorgeschlagen, dass die Montagestellen der Aufnahmeelemente der einzelnen Triebkranzaufnahmen auf dem gleichen Durchmesser bzw. Radius angeordnet sind. Es können daher wahlweise verschiedene der mindestens drei Triebkranzaufnahmen mit ein und demselben Triebkranz bestückt werden.

Eine weitere vorteilhafte Ausgestaltung der Erfindung sieht vor, dass die Triebkranzaufnahmen derart ausgebildet sind, dass diese beidseitig mit einem Triebkranz bestückbar sind. Auf diese Weise können die Triebkränze an ein und derselben Triebkranzaufnahme in zwei unterschiedlichen Positionen montiert werden.

Eine in konstruktiver Hinsicht vorteilhafte Ausgestaltung sieht vor, dass die Triebkranzaufnahmen axial zueinander beabstandet sind. Insbesondere können die Triebkranzaufnahmen axial in Richtung der Trommelachse der Antriebstrommel gegeneinander versetzt angeordnet sein.

In diesem Zusammenhang ist es von Vorteil, wenn der Abstand der axial außen liegenden Triebkranzaufnahme zur mittleren Triebkranzaufnahme größer ist als der Abstand der mittleren Triebkranzaufnahme zu der axial innen liegenden Triebkranzaufnahme. Der sich durch den größeren Abstand ergebene Platz kann beispielsweise für ein Führungselement genutzt werden, über welches etwa der Mittenführungszahn der Kette geführt wird.

Erfindungsgemäss ist also entsprechend vorgesehen, dass der Trommeldurchmesser im Bereich der axial außen liegenden Triebkranzaufnahme geringer ist als im Bereich der mittleren Triebkranzaufnahme und/oder der axial innen liegenden Triebkranzaufnahme. Es ergibt sich eine sich nach außen hin verjüngend ausgebildete Antriebstrommel.

Weiterhin ist vorgesehen, dass zwischen der axial äußeren Triebkranzaufnahme und der mittleren Triebkranzaufnahme ein Durchmessersprung angeordnet ist. Durch den sprunghaften Anstieg des Trommeldurchmessers zwischen der äußeren und der mittleren Triebkranzaufnahme wird erreicht, dass die mittlere und die innen liegende Triebkranzaufnahme in einem Bereich der Antriebstrommel mit etwa gleichem Durchmesser liegen. Der weiter außen liegenden Triebkranzaufnahme kann hingegen ein Trommelbereich geringeren Trommeldurchmessers zugeordnet sein, was im äußeren Bereich der Kette mit gewissen Vorteilen beispielsweise für den Schmutzaustrag verbunden ist.

Weitere Einzelheiten und Vorteile der vorliegenden Erfindung sollen nachfolgend unter Zuhilfenahme der beigefügten Zeichnungen eines Ausführungsbeispiels erläutert werden. Darin zeigen:
- Fig. 1: eine perspektivische Ansicht einer erfindungsgemäßen Antriebstrommel mit drei Triebkranzaufnahmen;
- Fig. 2: eine schematisierte und teilweise etwas abgewandelte Schnittansicht der Antriebstrommel gemäß Fig. 1 und
- Fig. 3: eine Schnittansicht gemäß der Darstellung in Fig. 2, in welcher zu Veranschaulichungszwecken verschiedene Triebkränze montiert sind.

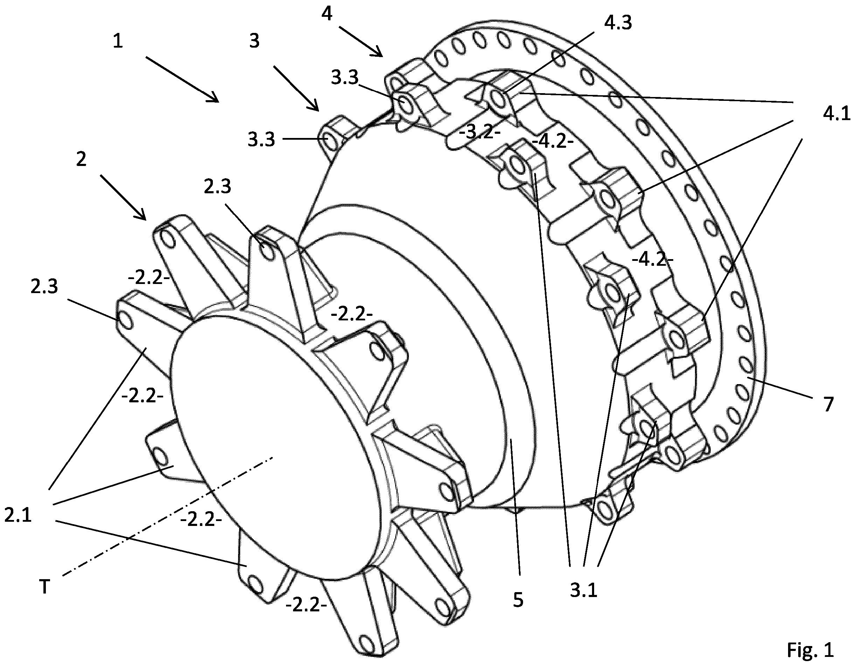

Fig. 1 zeigt in perspektivischer Ansicht eine Antriebstrommel 1 zum Antrieb eines kettengetriebenen Militärfahrzeugs.

Bei der Antriebstrommel 1 handelt es sich um eine als Seitenvorgelegetrommel ausgebildete Trommel, die mit dem auch als Seitenvorgelege bezeichneten Antrieb 6 des Kettenfahrzeugs verbunden ist. Die Antriebstrommel 1 kann nach einer Trommel innen hohl ausgebildet sein in deren Inneren dann nach Art eines Achsstummels ausgebildeter Antrieb 6 aufnehmen. Bei dem Antrieb 6 handelt es sich um das Seitenvorgelege des Kettenfahrzeugs.

Im axial innen liegenden Bereich weist der Antrieb 6 einen Flansch 7 auf, über welchen der Antrieb 6 angeflanscht werden kann.

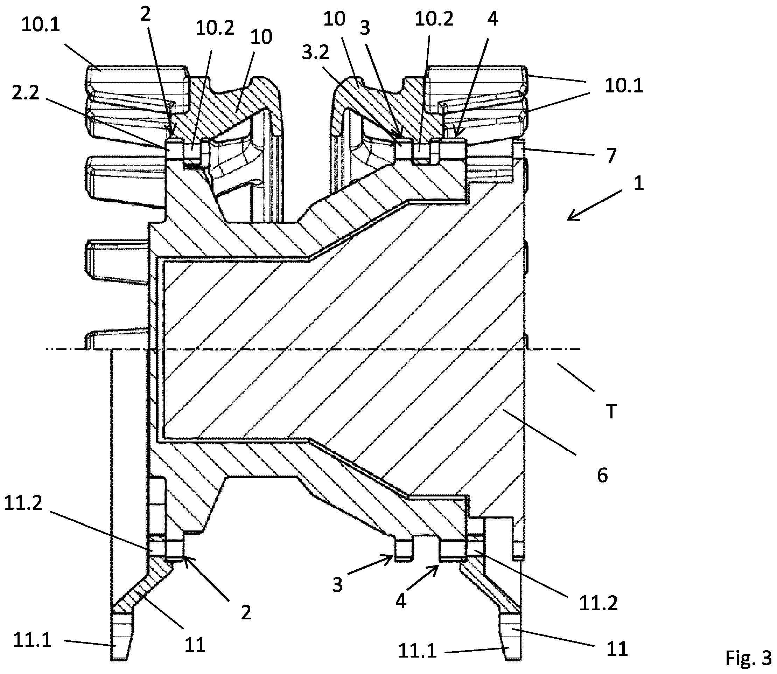

Wie der Darstellung in Fig. 1 zu entnehmen ist, weist die Antriebstrommel 1 gemäß dem Ausführungsbeispiel insgesamt drei Triebkranzaufnahmen 2, 3, 4 auf. Es ist jedoch auch denkbar, dass mehr als drei Triebkranzaufnahmen 2, 3, 4 vorgesehen sind, beispielsweise vier, fünf oder noch mehr. Die Triebkranzaufnahmen 2, 3, 4 sind nach Art von Zahnkränzen am Umfang der Antriebstrommel 1 angeordnet. Die Triebkranzaufnahmen 2, 3, 4 sind nach Art von Befestigungsflanschen ausgebildet, an welchen wahlweise unterschiedliche Arten von Triebkränzen 10, 11 befestigt werden können, je nachdem, welche Art von Kette für das Kettenfahrzeug verwendet werden soll. Die unterschiedliche Anordnung verschiedener Triebkränze 10, 11 wird anhand der Darstellung in Fig. 3 noch näher zu beschreiben sein.

Wie die Darstellung in Fig. 1 zunächst weiter erkennen lässt, weisen die einzelnen Triebkranzaufnahmen 2, 3, 4 jeweils mehrere nach Art von Vorsprüngen ausgestaltete Aufnahmeelemente 2.1, 3.1, 4.1 mit dazwischen liegend angeordneten Öffnungen 2.2, 3.2, 4.2 auf, wobei beim Ausführungsbeispiel jedem der nockenartigen Aufnahmeelement 2.1, 3.1, 4.1 jeweils eine Montagestelle 2.3, 3.3, 4.3 zugeordnet ist. Es können den zahnartigen Aufnahmeelementen 2.1, 3.1, 4.1 jedoch auch mehr als eine Montagestelle 2.3, 3.3, 4.3 zugeordnet sein. Beim Ausführungsbeispiel sind die Montagestellen 2.3, 3.3, 4.3 nach Art von Durchgangsbohrungen ausgebildet, an welchen sich die Triebkränze wahlweise von der einen oder der anderen Seite her anflanschen lassen. Es stehen daher insgesamt sechs Flanschflächen zur Anordnung unterschiedlicher Triebkränze zur Verfügung.

Wie die perspektivische Darstellung in Fig. 1 darüber hinaus gut erkennen lässt, sind die einzelnen Triebkranzaufnahmen 2, 3, 4 bzw. deren montagestellen 2.3, 3.3, 4.3 von etwa sternförmiger Geometrie und gegeneinander winkelversetzt angeordnet, wobei beim Ausführungsbeispiel die Montagestellen 2.3 der axial äußeren Triebkranzaufnahme 2 mit den Montagestellen 4.3 der axial innen liegenden Triebkranzaufnahme 4 fluchten und die Montagestellen 3.3 der mittleren Triebkranzaufnahme 3 demgegenüber winkelversetzt angeordnet sind. Die Montagestellen 3.3 und die Aufnahmeelemente 3.1 der mittleren Triebkranzaufnahme 3 sind in etwa mittig zwischen den entsprechenden Elementen der äußeren Triebkranzaufnahme 2 bzw. der innen liegenden Triebkranzaufnahme 4 angeordnet. Sie befinden sich daher in Fluchtung mit der Öffnung 2.2 zwischen den Aufnahmeelementen 2.1 der äußeren Triebkranzaufnahme 2. Ein an der Montagestelle 3.3 der mittleren Triebkranzaufnahme 3 anzuflanschendes Flanschelement eines Triebkranzes kann daher durch die Öffnung 2.2 hindurch gefädelt, axial direkt in Richtung der Montagestelle 3.3 geführt und dort mit dieser verbunden werden. Soll die Verbindung an der Rückseite des Aufnahmeelements 3.1 erfolgen oder die Befestigung an der axial innen liegenden Triebkranzaufnahme 4 gewünscht sein, kann der Triebkranz gedreht und durch die Öffnungen 3.2 bzw. 4.2 zwischen den Aufnahmeelementen 3.1 bzw. 4.1 der Triebkranzaufnahmen 3 bzw. 4 hindurchgeführt und entsprechend gedreht werden.

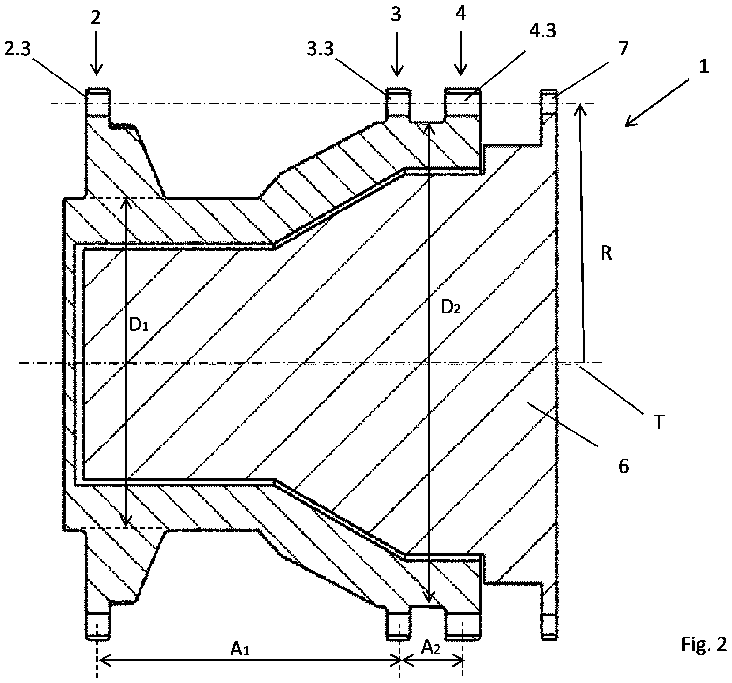

Wie die Darstellung in Fig. 2 dies weiter erkennen lässt, befinden sich die Montagestellen 2.3, 3.3 sowie 4.3 auf dem gleichen Radius R oberhalb der Trommelachse T. Nur zu Veranschaulichungszwecken sind die als Öffnungen ausgebildeten Montagestellen 2.3, 3.3 sowie 4.3 in Fig. 2 zueinander fluchtend dargestellt, obschon diese gemäß der Darstellung in Fig. 1 - wie vorstehend erläutert - gegeneinander winkelversetzt über den Umfang der Antriebstrommel 1 angeordnet sind.

Wie die Darstellung in Fig. 2 dies weiter erkennen lässt, sind die Triebkranzaufnahmen 2, 3, 4 über die Trommelachse T betrachtet axial voneinander beabstandet angeordnet. Die Abstände sind dabei derart gewählt, dass der Abstand A₁ zwischen der äußeren Triebkranzaufnahme größer ist als der Abstand A₂ zwischen der mittleren Triebkranzaufnahme 3 und der inneren Triebkranzaufnahme 4. Beim Ausführungsbeispiel ist der Abstand A₁ in etwa fünfmal so groß wie der Abstand A₂.

Die Darstellung in Fig. 2 lässt ferner erkennen, dass die Antriebstrommel 1 einen ungleichmäßigen Durchmesser aufweist, wobei die radial außen liegenden Bereiche der Antriebstrommel 1 einen geringeren Durchmesser als der radial innen liegende Bereich der Antriebstrommel 1 aufweist. So ist im Bereich der radial außen liegenden Triebkranzaufnahme 2 ein Durchmesser D₁ vorgesehen, der kleiner als der Durchmesser D₂ im Bereich der mittleren Triebkranzaufnahme 3 und der innen liegenden Triebkranzaufnahme 4 ist. Beim Ausführungsbeispiel ist der Trommeldurchmesser D₂ im Bereich der mittleren Triebkranzaufnahme 3 sowie der innen liegenden Triebkranzaufnahme 4 in etwa gleich. Zwischen der äußeren Triebkranzaufnahme 2 und der mittleren Triebkranzaufnahme 3 ist ein nach Art einer konischen Schräge ausgebildeter Durchmessersprung 5 vorgesehen. Der Durchmesser im Bereich der äußeren Triebkranzaufnahme 2 ist daher geringer, was gewisse Vorteile beim Betrieb des Kettenfahrzeugs mit sich bringt, beispielsweise hinsichtlich des Schmutzaustrages im Bereich des äußeren Triebkranzes 2 aus dem Kettenlaufwerk heraus. Darüber hinaus ist es möglich, diesen Bereich geringeren Durchmessers zum Führen eines Mittelführungszahns der Kette zu nutzen, so dass auch der Freigang zwischen Mittenführungszahn und Antriebstrommel 1 gewährleistet wird. Ferner ergibt sich ein geringes Gewicht.

Aufgrund der unterschiedlichen Durchmesser D₁, D₂ der Antriebstrommel und dem Umstand, dass die Montagestellen 2.3, 3.3, 4.3 auf dem gleichen Radius R liegen, weist die axial außen liegende Triebkranzaufnahme 2 eine größere radiale Erstreckung auf als die Aufnahmeelemente 3.3, 4.3 der mittleren Triebkranzaufnahme 3 sowie der innen liegenden Triebkranzaufnahme 4.

Die mit der erfindungsgemäßen Antriebstrommel 1 erzielbaren Montagevorteile beim Kettenwechsel lassen sich anhand der Darstellung in Fig. 3 erkennen.

Im Bereich oberhalb der Trommelachse T ist die Antriebstrommel 1 mit zwei Triebkränzen 10 eines ersten Typs bestückt. Bei den Triebkränzen 10 handelt es sich um solche Triebkränze 10, die mit vergleichsweise breiten Triebzähnen 10.1 versehen sind, wie diese insbesondere im Bereich von Gummibandketten eingesetzt werden. Die Triebkränze 10 sind hier beispielsweise an den Innenseiten der mittleren Triebkranzaufnahme 3 sowie der äußeren Triebkranzaufnahme 2 befestigt. Die innen liegende Triebkranzaufnahme 4 ist in dieser Konfiguration ungenutzt. Hierzu wird zunächst der innen liegende Triebkranz 10 mit dessen entsprechenden Montagestellen 10.1 gegenüber den Aufnahmeelementen 2.1 der äußeren Triebkranzaufnahme 3 derart verdreht, dass die Montagstellen 10.2 durch die Öffnungen 2.2 der Triebkranzaufnahme 2 hindurch gefädelt werden können. Sodann wird der Triebkranz 10 noch einmal verdreht und in den Bereich hinter den Aufnahmeelementen 3.1 der mittleren Triebkranzaufnahme 3 geführt. Sodann wird der Triebkranz 10 noch einmal verdreht, bis die Montagestellen 10.2 mit den Montagestellen 3.2 der mittleren Triebkranzaufnahme 3 fluchten. Sodann kann der innen liegende Triebkranz 10 entsprechend an der mittleren Triebkranzaufnahme 3 angeflanscht werden. Ähnlich ist es mit dem axial außen liegenden Triebkranz 10, welcher ebenfalls mit dessen Montagestellen 10.2 durch die Öffnungen 2.2 der äußeren Triebkranzaufnahme 2 hindurchgeführt und an dieser von innen angeflanscht wird.

Im Bereich unterhalb der Trommelachse T ist eine alternative Bestückung der Antriebstrommel 1 mit Triebkränzen 11 eines gänzlich anderen Typs vorgesehen. Wie sich unschwer erkennen lässt, handelt es sich bei den Triebkränzen 11 um solche Triebkränze, bei welchen die Triebzähne 11.1 wesentlich schmaler ausgebildet sind, als dies bei den Triebzähnen 10.1 der Triebkränze 10 der Fall ist. Bei den Triebkränzen 11 handelt es sich um solche, die bei Stahlketten verwendet werden. Deren Triebzähne 11.1 sind üblicherweise schmaler ausgestaltet als die Triebzähne 10.1 für Gummiketten, da die Stahlketten insoweit größeren Flächenpressungen Stand halten.

Im Gegensatz zu den im oberen Bereich eingezeichneten Triebkränzen 10 sind die im unteren Bereich eingezeichneten Triebkränze 11 an der axial außen liegenden Triebkranzaufnahme 2 und der axial innen liegenden Triebkranzaufnahme 4 angeordnet. Die mittlere Triebkranzaufnahme 3 wird in dieser Konfiguration nicht genutzt. Die Befestigung erfolgt an der innen liegenden Flanschfläche der innen liegenden Triebkranzaufnahme 4 und der außen liegenden Flanschfläche der äußeren Triebkranzaufnahme 2, wobei die Befestigung in analoger Weise zu dem vorher in Bezug auf die Triebkränze 10 gemachten Erläuterungen erfolgt.

Durch das Vorsehen von mindestens drei Triebkranzaufnahmen 2, 3, 4 an der Antriebstrommel 1 lassen sich je nach erforderlicher Kette wahlweise unterschiedliche Triebkränze 10, 11 in unterschiedlicher Konfiguration an der Antriebstrommel 1 montieren.

Der Montageaufwand wird gegenüber herkömmlichen Lösungen, bei welchen mit dem Wechsel des Kettentyps stets auch ein Wechsel der Antriebstrommel 1 bzw. einer Adaption der vorhandenen Antriebstrommel 1 oder sogar des gesamten Antriebs 6 über entsprechende Adapterelemente erforderlich ist, deutlich reduziert. Hierzu sind die Triebkranzaufnahmen 2, 3, 4 derart ausgebildet, dass diese von beiden Seiten her bestückt werden können. Es ergeben sich daher insgesamt sechs Montageflächen zur Anordnung unterschiedlicher Triebkränze 10, 11 in unterschiedlicher Konfiguration.

### Bezugszeichen:

- 1: Antriebstrommel
- 2: Triebkranzaufnahme
- 2.1: Aufnahmeelemente
- 2.2: Öffnung
- 2.3: Montagestelle
- 3: Triebkranzaufnahme
- 3.1: Aufnahmeelemente
- 3.2: Öffnung
- 3.3: Montagestelle
- 4: Triebkranzaufnahme
- 4.1: Aufnahmeelemente
- 4.2: Öffnung
- 4.3: Montagestelle
- 5: Durchmessersprung
- 6: Antrieb/Seitenvorgelege
- 7: Flansch
- 10: Triebkranz
- 10.1: Triebzahn
- 10.2: Montagstelle
- 11: Triebkranz
- 11.1: Triebzahn
- 11.2: Montagestelle
- A₁: Abstand
- A₂: Abstand
- D₁: Trommeldurchmesser
- D₂: Trommeldurchmesser
- R: Radius
- T: Trommelachse

## Patentansprüche

1. Antriebstrommel für kettengetriebene Fahrzeuge, insbesondere militärische Fahrzeuge,
mit
mindestens drei umfangsseitig angeordneten Triebkranzaufnahmen (2, 3, 4) zur Montage von in die Fahrzeugkette eingreifenden Triebkränzen (10, 11),
**dadurch gekennzeichnet,**
**dass** der Trommeldurchmesser (D₁) im Bereich der axial außen liegenden Triebkranzaufnahme (2) geringer ist als der Trommeldruchmesser (D₂) im Bereich der mittleren Triebkranzaufnahme (3) und/oder der axial innen liegenden Triebkranzaufnahme (4), wobei zwischen der axial äußeren Triebkranzaufnahme (2) und der mittleren Triebkranzaufnahme (3) ein Durchmessersprung (5) nach Art einer konischen Schräge angeordnet ist.

2. Antriebstrommel nach Anspruch 1, **dadurch gekennzeichnet, dass** die Triebkranzaufnahmen (2, 3, 4) nach Art von Befestigungsflanschen ausgebildet sind.

3. Antriebstrommel nach einem der Ansprüche 1 oder 2, **dadurch gekennzeichnet, dass** die Triebkranzaufnahmen (2, 3, 4) jeweils mehrere Aufnahmeelemente (2.1, 3.1, 4.1) aufweisen.

4. Antriebstrommel nach Anspruch 3, dass die Aufnahmeelemente (2.1, 3.1, 4.1) der einzelnen Triebkranzaufnahmen (2, 3, 4) gegeneinander winkelversetzt angeordnet sind.

5. Antriebstrommel nach einem der vorhergehenden Ansprüche, **dadurch gekennzeichnet, dass** die Aufnahmeelemente (2.1, 3.1, 4.1) jeweils eine Montagestelle (2.3, 3.3, 4.3) aufweisen.

6. Antriebstrommel nach Anspruch 5, **dadurch gekennzeichnet, dass** die Montagestellen (2.3, 3.3, 4.3) der Aufnahmeelemente (2.1, 3.1, 4.1) der Triebkranzaufnahmen (2, 3, 4) auf dem gleichen Radius (R) angeordnet sind.

7. Antriebstrommel nach einem der vorhergehenden Ansprüche, **dadurch gekennzeichnet, dass** die Triebkranzaufnahmen (2, 3, 4) derart ausgebildet sind, dass diese beidseitig mit einem Triebkranz (10, 11) bestückbar sind.

8. Antriebstrommel nach einem der vorhergehenden Ansprüche, **dadurch gekennzeichnet, dass** die Triebkranzaufnahmen (2, 3, 4) axial zueinander beabstandet sind.

9. Antriebstrommel nach Anspruch 8, **dadurch gekennzeichnet, dass** der Abstand (A₁) der axial außen liegenden Triebkranzaufnahme (2) zur mittleren Triebkranzaufnahme (3) größer ist als der Abstand (A₂) der mittleren Triebkranzaufnahme (3) zu der axial innen liegenden Triebkranzaufnahme (4).

## Claims

1. Driving drum for tracked vehicles, in particular military vehicles,
having
at least three driver pinion receiving means (2, 3, 4) arranged on the circumferential side for the assembly of driver pinions (10, 11) engaging with the vehicle track,
**characterized in that**
the drum diameter (D₁) in the region of the axially external driver pinion receiving means (2) is smaller than the drum diameter (D₂) in the region of the centre driver pinion receiving means (3) and/or the axially internal driver pinion receiving means (4), wherein a jump in diameter (5) in the manner of a conical slope is arranged between the axially outer driver pinion receiving means (2) and the centre driver pinion receiving means (3).

2. Driving drum according to Claim 1, **characterized in that** the driver pinion receiving means (2, 3, 4) are configured in the manner of fastening flanges.

3. Driving drum according to one of Claims 1 or 2, **characterized in that** the driver pinion receiving means (2, 3, 4) each have multiple receiving elements (2.1, 3.1, 4.1).

4. Driving drum according to Claim 3, **characterized in that** the receiving elements (2.1, 3.1, 4.1) of the individual driver pinion receiving means (2, 3, 4) are arranged angularly offset in respect of one another.

5. Driving drum according to one of the preceding claims, **characterized in that** the receiving elements (2.1, 3.1, 4.1) each have an assembly point (2.3, 3.3, 4.3).

6. Driving drum according to Claim 5, **characterized in that** the assembly points (2.3, 3.3, 4.3) of the receiving elements (2.1, 3.1, 4.1) of the driver pinion receiving means (2, 3, 4) are arranged on the same radius (R).

7. Driving drum according to one of the preceding claims, **characterized in that** the driver pinion receiving means (2, 3, 4) are designed in such a manner that they can be fitted with a driver pinion (10, 11) on both sides.

8. Driving drum according to one of the preceding claims, **characterized in that** the driver pinion receiving means (2, 3, 4) are spaced apart axially from one another.

9. Driving drum according to Claim 8, **characterized in that** the spacing (A₁) of the axially external driver pinion receiving means (2) from the centre driver pinion receiving means (3) is greater than the spacing (A₂) of the centre driver pinion receiving means (3) from the axially internal driver pinion receiving means (4).

## Revendications

1. Tambour d'entraînement pour véhicules entraînés par chaîne, notamment véhicules militaires, comprenant :
au moins trois logements de couronne d'entraînement (2, 3, 4) agencés sur la circonférence pour le montage de couronnes d'entraînement (10, 11) s'engageant dans la chaîne de véhicule,
**caractérisé en ce que**
le diamètre de tambour (D₁) dans la zone du logement de couronne d'entraînement situé axialement à l'extérieur (2) est inférieur au diamètre de tambour (D₂) dans la zone du logement de couronne d'entraînement central (3) et/ou du logement de couronne d'entraînement situé axialement à l'intérieur (4), un saut de diamètre (5) à la manière d'un chanfrein conique étant agencé entre le logement de couronne d'entraînement axialement extérieur (2) et le logement de couronne d'entraînement central (3).

2. Tambour d'entraînement selon la revendication 1, **caractérisé en ce que** les logements de couronne d'entraînement (2, 3, 4) sont configurés à la manière de brides de fixation.

3. Tambour d'entraînement selon l'une quelconque des revendications 1 ou 2, **caractérisé en ce que** les logements de couronne d'entraînement (2, 3, 4) présentent chacun plusieurs éléments de réception (2.1, 3.1, 4.1).

4. Tambour d'entraînement selon la revendication 3, **caractérisé en ce que** les éléments de réception (2.1, 3.1, 4.1) des logements de couronne d'entraînement (2, 3, 4) individuels sont agencés en décalage angulaire les uns par rapport aux autres.

5. Tambour d'entraînement selon l'une quelconque des revendications précédentes, **caractérisé en ce que** les éléments de réception (2.1, 3.1, 4.1) présentent chacun un emplacement de montage (2.3, 3.3, 4.3).

6. Tambour d'entraînement selon la revendication 5, **caractérisé en ce que** les emplacements de montage (2.3, 3.3, 4.3) des éléments de réception (2.1, 3.1, 4.1) des logements de couronne d'entraînement (2, 3, 4) sont agencés sur le même rayon (R).

7. Tambour d'entraînement selon l'une quelconque des revendications précédentes, **caractérisé en ce que** les logements de couronne d'entraînement (2, 3, 4) sont configurés de telle sorte qu'ils peuvent être équipés des deux côtés d'une couronne d'entraînement (10, 11).

8. Tambour d'entraînement selon l'une quelconque des revendications précédentes, **caractérisé en ce que** les logements de couronne d'entraînement (2, 3, 4) sont espacés axialement les uns des autres.

9. Tambour d'entraînement selon la revendication 8, **caractérisé en ce que** la distance (A₁) entre le logement de couronne d'entraînement situé axialement à l'extérieur (2) et le logement de couronne d'entraînement central (3) est supérieure à la distance (A₂) entre le logement de couronne d'entraînement central (3) et le logement de couronne d'entraînement situé axialement à l'intérieur (4).
